# EUROPÄISCHE PATENTANMELDUNG

(11) **EP 1 637 463 A1**
(43) Veröffentlichungstag der Anmeldung: **22.03.2006**
(21) Anmeldenummer: 04405580.4
(22) Anmeldetag: 15.09.2004
(51) Int. Cl.: B65D 19/00

(54) **Träger zur rutschfesten Aufnahme von Teilen**

(71) Anmelder: Lanz-Anliker AG, 4938 Rohrbach (CH)
(72) Erfinder: Lieberherr Hans-Rudolf, 4934 Madiswil (CH)
(74) Vertreter: Roshardt, Werner Alfred

(57) **Zusammenfassung**

Ein Träger (1) zur rutschfesten Aufnahme von Teilen umfasst eine Platte (7) und eine Kunststoffschicht (8), welche eine Oberseite der Platte (7) und eine Unterseite der Platte (7) im Wesentlichen vollständig bedeckt, so dass die Kunststoffschicht (8) rutschfeste ebene Aufnahmeflächen zur Aufnahme der Teile bildet. Die Platte (7) weist in einem Randbereich (6) eine gegenüber einem inneren Bereich (5) verringerte Plattendicke auf, und die ebenen Aufnahmeflächen erstrecken sich bis in den Randbereich (6), wobei im Randbereich (6) die Kunststoffschicht (8) eine gegenüber dem inneren Bereich (5) vergrösserte Schichtdicke aufweist. Zur Herstellung eines solchen Trägers wird zunächst eine Platte (7) bereitgestellt mit einem in einem Randbereich (6) gegenüber einem inneren Bereich (5) verringerten Querschnitt. Daraufhin wird eine flüssige Kunststofflösung auf eine erste Seite der horizontal gelagerten Platte (7) aufgegossen, derart dass auf der ersten Seite eine erste ebene Aufnahmefläche zur Aufnahme der Teile gebildet wird, welche sich bis in den Randbereich (6) erstreckt. Nach Erreichen einer genügenden Festigkeit wird die Platte (7) gewendet und das Aufgiessen der Kunststofflösung auf der anderen Seite wiederholt. Die im Randbereich vergrösserte Schichtdicke verhindert ein Ablösen der Kunststoffschicht von der Platte bei äusseren Einflüssen auf den Randbereich des Trägers. Ein zusätzlicher Kantenschutz erübrigt sich.

## Beschreibung

### Technisches Gebiet

Die Erfindung betrifft einen Träger zur rutschfesten Aufnahme von Teilen, wobei der Träger eine Platte umfasst und eine Kunststoffschicht, welche eine Oberseite der Platte und eine Unterseite der Platte im Wesentlichen vollständig bedeckt, so dass die Kunststoffschicht rutschfeste ebene Aufnahmeflächen zur Aufnahme der Teile bildet. Die Erfindung betrifft ferner ein Verfahren zur Herstellung eines Trägers zur rutschfesten Aufnahme von Teilen.

### Stand der Technik

Derartige Träger sind an sich bekannt und werden zur Lagerung und zum Transport von Teilen eingesetzt, z. B. von Werkstücken, Getrieben, Motoren- oder anderen Bauteilen. Solche Träger werden beispielsweise als Zwischenlagen eingesetzt, wenn mehrere Lagen von Teilen übereinander in einer Palette gelagert werden sollen. In diesem Fall sind mehrere Träger mit aufliegenden Teilen aufeinander gestapelt.

Früher erfolgte die Lagerung von Teilen, insbesondere von solchen mit einer grossen Masse, üblicherweise auf Trägern, in welchen mehrere Vertiefungen (sogenannte Formnester) zur formschlüssigen Aufnahme der Teile vorgesehen waren. Dies hat ein Verrutschen der Teile beim Transport verhindert. Allerdings mussten die Vertiefungen den zu haltenden Teilen angepasst sein, so dass für verschiedene Werkstücke auch verschiedene Träger benötigt wurden. Dies hat einerseits zu erheblichen Herstellungskosten der Träger geführt, weil diese nur in Kleinserien gefertigt werden konnten. Ausserdem bedeuteten die verschiedenartigen Träger einen erhöhten Lageraufwand beim Anwender.

Bei Motorenteilen war die Lagerung auf flachen Trägern auch deshalb unüblich, weil die Teile oft Öl- oder Fettverschmutzungen aufgewiesen haben, welche die Haftung der Teile auf den Trägern noch herabsetzten. Zudem wurde bei der Verwendung von Kunststoffträgern ein Abrieb des Trägermaterials beobachtet. Dieser hat sich auf den Teilen abgesetzt und musste vor der Weiterverarbeitung durch aufwändige Reinigungsverfahren entfernt werden.

Die DE 296 10 010 U 1 (Julius Bauer GmbH) beschreibt einen stapelförmigen Werkstückträger ohne Formnester, mit einem Formkörper aus hartem Kunststoff, der eine im Wesentlichen ebene und rutschfeste Aufnahmefläche zur Aufnahme von Teilen bildet. Zu diesem Zweck ist die Aufnahmefläche beidseitig mit einer dünnen Beschichtung aus einem weichen, rutschfesten Kunststoff, insbesondere einem thermoplastischen Elastomer, versehen. Die Beschichtung weist eine Schichtdicke von 0.5 bis 3 mm und eine Shore-Härte von etwa 10 bis 40 auf. Der Formkörper kann mit einem hochgezogenen Rand versehen sein, dessen Querschnitt ungefähr die Form eines umgedrehten U hat, wobei die Kontur der so gebildeten Aussenwand etwa bündig mit der beschichteten Aufnahmefläche verläuft.

Durch die rutschfeste Beschichtung wird eine verbesserte Haftung der aufgenommenen Teile auf dem Werkstückträger erreicht. Die beidseitige Beschichtung ermöglicht die Verwendung als stapelbarer Werkstückträger. Wegen der Weichheit des Beschichtungsmaterials sinken schwere Werkstücke etwas in die Oberfläche der Beschichtung ein, so dass ein Verrutschen durch den resultierenden Formschluss vermieden wird. Gleichzeitig wird so auch verhindert, dass Abrieb entsteht. Der hochgezogene Rand verhindert ausserdem, dass die dünne Beschichtung der Aufnahmefläche bei äusseren Einflüssen auf den Randbereich verletzt wird, dass sie sich z. B. teilweise vom Formkörper ablöst.

Der hochgezogene Rand ist allerdings in der Herstellung aufwändig und zudem praktisch nur bei Formkörpern aus Kunststoff realisierbar. Er erschwert zudem das Handling des Trägers und das Lagern der unbenutzten Träger. Der Randbereich stellt zudem eine potentielle Schwachstelle des Trägers dar, welche dessen Lebensdauer einschränken kann.

### Darstellung der Erfindung

Aufgabe der Erfindung ist es, einen dem eingangs genannten technischen Gebiet zugehörenden Träger zur rutschfesten Aufnahme von Teilen zu schaffen, welcher einfach herstellbar, dauerhaft sowie einfach handhabbar und lagerbar ist.

Die Lösung der Aufgabe ist durch die Merkmale des Anspruchs 1 definiert. Gemäss der Erfindung weist die Platte in einem Randbereich eine gegenüber einem inneren Bereich verringerte Plattendicke auf. Die ebenen Aufnahmeflächen erstrecken sich zudem bis in den Randbereich, wobei im Randbereich die Kunststoffschicht eine gegenüber dem inneren Bereich vergrösserte Schichtdicke aufweist.

Die Schichtdicke der Kunststoffschicht wird im Randbereich somit auf Kosten der Plattendicke vergrössert. Die vergrösserte Schichtdicke verhindert ein Ablösen der Kunststoffschicht von der Platte bei äusseren Einflüssen auf den Randbereich des Trägers, ein Problem welches bei dünnen Beschichtungen oder beispielsweise Folien auftritt. Der Kunststoffteil im Kantenbereich nimmt zudem Schläge an der Kante auf und absorbiert diese (zusammenwirkend mit der Platte). Somit kann die Beanspruchung der Aufnahmefläche minimiert werden. Ein zusätzlicher Kantenschutz ist nicht notwendig. Weil zum Schutz der Kunststoffschicht kein weit nach oben und unten abstehender Rand benötigt wird und somit der Träger als im Wesentlichen randloses, flaches Panel ausgebildet werden kann, ist seine Handhabung, sowohl manuell als auch durch Maschinen, wie z. B. Roboter, verbessert, und er benötigt bei der Lagerung ein Minimum an Platz. Der Träger kann ausserdem aus im Wesentlichen nur zwei Materialien hergestellt werden, wobei die Platte praktisch von der Kunststoffschicht eingehüllt ist. Durch diese Homogenität werden mögliche Schwachstellen von vornherein vermieden, so dass eine grosse Lebensdauer des Trägers gewährleistet ist. Aufgrund des einfachen Aufbaus lässt sich der Träger zudem kostengünstig und rationell herstellen. Weil die Platte, welche dem Träger seine Festigkeit verleiht, bis in den Randbereich hinein reicht, bevorzugt bis zum Trägerrand, stabilisiert sie auch den Randbereich und verhindert, dass die Kantenregion aus dem Kunststoffmaterial bei groben Stössen an die Plattenumrandung Schaden nimmt.

Bevorzugt läuft der Randbereich mit der verringerten Plattendicke im Wesentlichen vollständig entlang einem Rand der Platte um. Dies gewährleistet, dass die Kunststoffschicht durch ihren Randbereich mit der vergrösserten Schichtdicke rundum vor Beschädigungen geschützt ist. Dies ermöglicht die rationelle Herstellung des erfindungsgemässen Trägers, indem beispielsweise eine im Wesentlichen rechteckige Platte verwendet wird.

Alternativ sind entlang des Randes mehrere beabstandete Bereiche mit einer verringerten Plattendicke vorgesehen. Um Verletzungen der Kunststoffschicht zu verhindern, können die restlichen Randbereiche mit der vollen Plattendicke beispielsweise gegenüber diesen Bereichen zurückversetzt sein. Es kann aus fertigungstechnischen Gründen vorteilhaft sein, wenn die Eckbereiche des Trägers keine verringerte Plattendicke aufweisen. In solchen Fällen haben die Ecken bevorzugt eine abgerundete Form, so dass die Eckbereiche äusseren Einflüssen weniger ausgesetzt sind.

Mit Vorteil ist die verringerte Plattendicke im Randbereich durch beidseitige Stufen an einem Übergang zwischen dem inneren Bereich und dem Randbereich bewirkt. Die Stufen sind bevorzugt auf beiden Seiten der Platte symmetrisch ausgebildet. Ein derartiger Übergang ist einfach und rationell herstellbar, beispielsweise durch beidseitiges Wegfräsen oder Ausschneiden der entsprechenden Querschnittsbereiche. Es hat sich ausserdem gezeigt, dass mit solchen stufigen Übergängen ein optimaler Schutz des inneren Bereichs der Kunststoffschicht erreicht wird.

Alternativ verläuft der Übergang zwischen dem inneren Bereich und dem Randbereich der Platte fliessend, indem die Plattendicke nach aussen hin allmählich abnimmt. Die Abnahme kann sich bis zum Rand hin fortsetzen, oder an einen keilartig zulaufenden Abschnitt kann sich ein äusserer Abschnitt mit verminderter Plattendicke anschliessen.

Vorzugsweise beträgt die vergrösserte Schichtdicke der Kunststoffschicht im Randbereich mindestens das Dreifache einer Dicke der Kunststoffschicht im inneren Bereich. Dadurch ist gewährleistet, dass der innere Bereich mit der dünnen Kunststoffschicht durch den Randbereich mit der entsprechend dickeren Schicht gut geschützt ist. Entsprechend muss die Plattendicke im Randbereich gegenüber der Dicke im inneren Bereich der Platte reduziert werden. Bei dünnen Platten kann im Randbereich lediglich noch eine Plattendicke von einem Viertel der Dicke im inneren Bereich übrig bleiben, während bei dicken Platten eine Verringerung der Plattendicke um beispielsweise 15-20% genügen kann.

Alternativ, insbesondere in Fällen, wo die Kunststoffschicht auch im inneren Bereich eine vergleichsweise grosse Schichtdicke aufweist, kann das Verhältnis der Schichtdicken zwischen aussen und innen kleiner als 3:1 gewählt werden.

Bevorzugt weist der Träger im inneren Bereich angeordnete Greifmittel zum Erfassen des Trägers auf. Als Greifmittel können beispielsweise zwei Handgriffe vorgesehen sein, welche als durchgehende Öffnungen im Träger ausgebildet sind. Zum Erfassen des Trägers mit einem Werkzeug, z. B. mit einem Transportroboter, kann zusätzlich oder anstelle der Handgriffe auch mindestens eine Buchse vorgesehen sein, in welche das Werkzeug eingreifen kann. Mit Vorteil sind die Innenkanten der Handgriff-Öffnungen auf dieselbe Weise ausgebildet wie die Aussenkanten des Trägers, d. h. mit Vorteil weist die Kunststoffschicht im Bereich der Innenkanten eine gegenüber dem Hauptteil der Aufnahmefläche vergrösserte Schichtdicke auf. Zu diesem Zweck ist die Plattendicke unmittelbar anschliessend an die Öffnungen verringert.

Die Buchse, vorzugsweise aus Metall gefertigt, ist mit Vorteil versenkt in einer passenden durchgehenden Öffnung der Platte befestigt, d. h. die Dicke der Buchse ist geringer als die Plattendicke im Hauptteil der Aufnahmefläche, und die Buchse tritt beidseitig hinter die Oberfläche der Platte zurück. Die Schichtdicke der Kunststoffschicht wird im Buchsenbereich wiederum vergrössert, so dass sich die ebene Aufnahmefläche bis in den Buchsenbereich erstreckt, beispielsweise bis zum Innenrand der Buchse. Dadurch ist die Kunststoffschicht auch rund um die Buchse herum geschützt. Dies ist deshalb wichtig, weil gerade durch das maschinelle Ergreifen des Trägers die Gefahr einer Beschädigung der Kunststoffschicht besteht.

Vorzugsweise ist die Platte eine Holzplatte, insbesondere aus schichtverleimtem Holz. Dieser Werkstoff ist kostengünstig, leicht und einfach verarbeitbar. Er gewährleistet eine hohe Stabilität des erfindungsgemässen Trägers. Bei üblichen Anwendungen wird im inneren Bereich des Trägers ungefähr eine Dicke der Holzplatte von 5-15 mm benötigt.

Alternativ sind andere Werkstoffe wie Kunststoffe, Leichtmetalle, Kohlefaser- oder Glasfaserplatten oder Verbundwerkstoffe einsetzbar.

Mit Vorteil ist die Kunststoffschicht aus einem Polyurethan-Elastomer gebildet, insbesondere mit einer Shore-A-Härte von mindestens 40, bevorzugt mindestens 60. Polyurethan-Elastomere (PU-Elastomere) sind einfach zu verarbeiten, ermöglichen eine hohe Rutschfestigkeit und die genannten hohen Härten, so dass der Abrieb der Kunststoffschicht minimiert wird. PU-Elastomere sind zudem beständig gegenüber Öl, Schmier- und Reinigungsmitteln. Das PU-Elastomer ist sowohl für die Aufnahmefläche im inneren Bereich des Trägers als auch für den Randbereich gut geeignet. Somit kann im Wesentlichen die gesamte Oberfläche des Trägers mit einer homogenen Kunststoffschicht versehen werden. Für die Verarbeitung vorteilhaft sind insbesondere PU-Elastomere in der Form von Giessharzen. Für übliche Anwendungen sind im inneren Bereich des Trägers Schichtdicken von ca. 0.5-2.0 mm geeignet, während die Schichtdicke im Randbereich 1.5-7 mm, bevorzugt 2-5 mm beträgt.

Alternativ können auch andere Kunststoffe eingesetzt werden, z. B. thermoplastische Elastomere (TPE) auf Polyurethan-, Polyester- oder Polyetherbasis.

Bevorzugt umfasst der Träger mindestens einen Bereich, in welchem die Kunststoffschicht eine erhöhte Schichtdicke aufweist, derart, dass eine Oberfläche des Bereichs gegenüber den Aufnahmeflächen hervorsteht. Dies stellt sicher, dass leere Träger, welche unmittelbar aufeinander gelagert werden, einfach wieder voneinander getrennt werden können. Sind nämlich die Oberflächen der Träger vollkommen glatt, haften benachbarte Träger aufgrund der Adhäsion grossflächig aufeinander und können nur mehr mit grossem Kraftaufwand voneinander separiert werden. Sind hervorstehende Bereiche vorhanden, so berühren sich aufeinanderliegende Träger nur in kleinen Oberflächengebieten, so dass eine starke Haftung zwischen benachbarten Trägern verhindert wird.

Alternativ weisen die Träger zusätzliche Distanzhalter auf, welche beispielsweise an einigen Stellen auf die Auflageflächen geklebt werden, oder beim Lagern der leeren Träger werden stets Distanzhalter zwischen benachbarten Trägern angeordnet.

Mit Vorteil weist die Kunststoffschicht in einem äussersten Randbereich eine zusätzlich erhöhte Schichtdicke auf, so dass, bevorzugt beidseitig, ein gegenüber den Aufnahmeflächen hervorstehender Rand gebildet wird. Somit wird der hervorstehende Bereich durch die zusätzlich erhöhte Schichtdicke im äussersten Randbereich gebildet. Dies hat den Vorteil, dass die Funktion der Auflagefläche nicht durch Erhebungen behindert wird. Der hervorstehende Rand ist zudem einfach herstellbar, wie weiter unten noch eingehender ausgeführt wird. Die beidseitige Ausführung des Randes stellt sicher, dass ein Haften unabhängig von der Orientierung der Träger verhindert wird.

Ein Verfahren zur Herstellung eines Trägers zur rutschfesten Aufnahme von Teilen umfasst folgende Schritte:
a) Bereitstellen einer Platte mit einem in einem Randbereich gegenüber einem inneren Bereich verringerten Querschnitt;
b) Aufgiessen einer flüssigen Kunststofflösung auf eine erste Seite der horizontal gelagerten Platte, derart dass auf der ersten Seite eine erste ebene Aufnahmefläche zur Aufnahme der Teile gebildet wird, welche sich bis in den Randbereich erstreckt;
c) nach Erreichen einer genügenden Festigkeit Wenden der Platte und Aufgiessen der flüssigen Kunststofflösung auf eine zweite Seite der wiederum horizontal gelagerten Platte, derart dass auf der zweiten Seite eine zweite ebene Aufnahmefläche zur Aufnahme der Teile gebildet wird, welche sich bis in den Randbereich erstreckt.

Dieses Verfahren ist einfach und lässt sich rationell und kostengünstig durchführen. Die Zusammensetzung und die Temperatur der flüssigen Kunststofflösung werden so gewählt, dass die Lösung sich zunächst schnell auf der Platte verteilt und eine ebene Oberfläche bildet, und dass sie anschliessend schnell fest wird, damit der Herstellungsprozess fortgesetzt werden kann. Punktuelle Erhöhungen in gewissen Bereichen der Aufnahmefläche lassen sich auf einfache Weise herstellen, indem nach Erreichen einer gewissen Festigkeit der ebenen Kunststoffschicht eine gewisse Menge weiterer Kunststofflösung auf die teilweise gefestigte Schicht gegeben wird. Je nach der Menge und der Viskosität der Kunststofflösung und dem gewählten Zeitpunkt im Festigungsprozess bildet sich dann eine (im Wesentlichen kreisförmige) Erhebung auf der Aufnahmefläche mit einer entsprechenden Höhe und einem entsprechenden Durchmesser aus. Die angegossenen Erhebungen verbinden sich mit dem erst teilweise gefestigten Untergrund, so dass keine Gefahr besteht, dass sie während des Gebrauchs des Trägers wieder von der Aufnahmefläche abgelöst werden könnten.

Mit Vorteil wird vor dem Aufgiessen der Kunststofflösung eine sich bezüglich einer Hauptfläche der Platte nach oben erstreckende Schalung angebracht, so dass durch Adhäsion der Kunststofflösung an der Schalung ein bezüglich den Aufnahmeflächen hervorstehender Rand gebildet wird. Die Höhe des Randes kann durch die Benetzbarkeit des Schalungsmaterials durch die Kunststofflösung beeinflusst werden. Das Profil des Randes lässt sich durch die Form und Orientierung der Schalung beeinflussen. Der hervorstehende Rand dient wie oben ausgeführt zur Verhinderung des Anhaftens von zwei unmittelbar aufeinander gelagerten erfindungsgemässen Trägern. Ein Rand kann auf diese Weise nicht nur am äusseren Rand des Trägers hergestellt werden, sondern je nach Wunsch auch bei Handgriffen oder einer Buchse für ein Werkzeug, so dass ein Haften zweier Platten aneinander noch zuverlässiger vermieden werden kann. Wird in einem Randbereich kein Rand gewünscht, z. B. aus ergonomischen Gründen, kann ein Schalungsmaterial (bzw. eine Beschichtung für das Schalungsmaterial) gewählt werden, welches durch die Kunststofflösung nicht benetzt wird. So kann eine zur Platte hin abgerundete Kante hergestellt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Draufsicht auf einen erfindungsgemässen Träger;
- Fig. 2: einen vertikalen Querschnitt durch die Randregion des Trägers;
- Fig. 3: einen vertikalen Querschnitt durch eine Handgrifföffnung des Trägers;
- Fig. 4: einen vertikalen Querschnitt durch eine Buchse zum Ergreifen des Trägers mit einem Werkzeug;
- Fig. 5A, B: eine schematische Darstellung von Verfahrensschritten zum Herstellen des erfindungsgemässen Trägers.

Grundsätzlich sind in den Figuren gleiche Teile mit gleichen Bezugszeichen versehen.

### Wege zur Ausführung der Erfindung

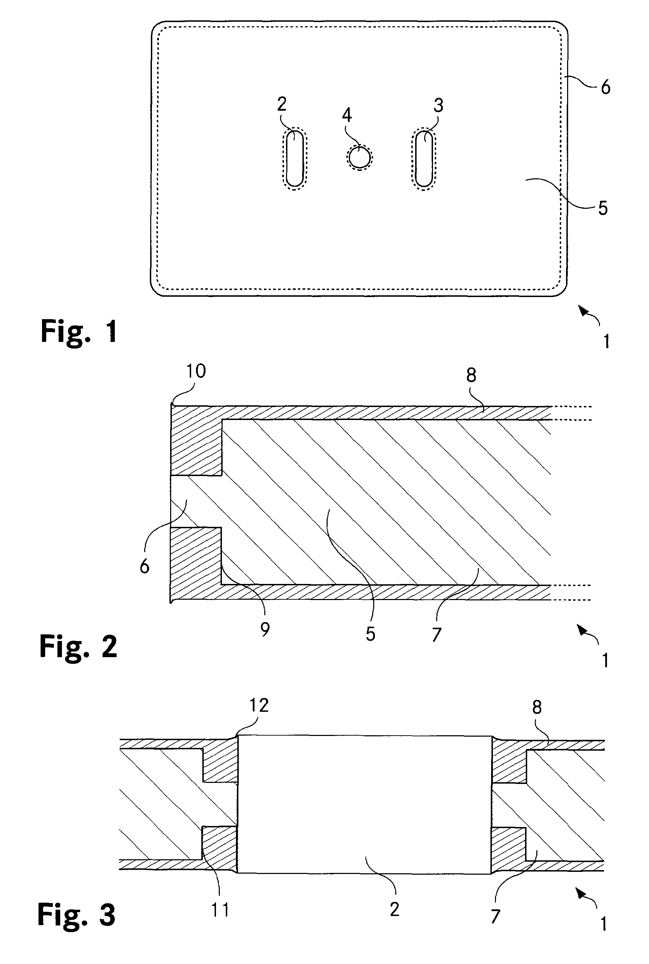

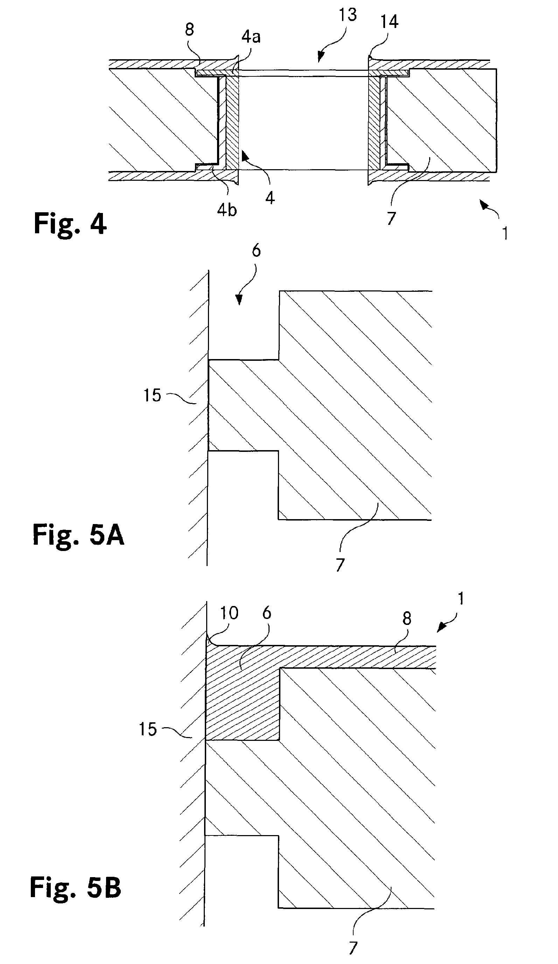

Die Figur 1 zeigt eine Draufsicht auf einen erfindungsgemässen Träger. Der Träger 1 hat eine rechteckige Grundfläche mit abgerundeten Ecken. Die Dimensionen betragen im dargestellten Beispiel 1150 x 765 mm, der Eckenradius 55 mm. Diese Werte können aber der aktuellen Anwendung angepasst werden, insbesondere einer Palettengrösse oder der Masse der aufzunehmenden Teile. Der Träger 1 weist in seiner Längsachse zwei durchgehende Öffnungen 2, 3 auf als Handgriffe zum manuellen Ergreifen des Trägers 1. Ihre Form ist rechteckig mit abgerundeten Ecken, mit einer Ausdehnung von beispielsweise 150 × 44 mm und einem Eckenradius von 22 mm, wobei die längere Seite der Öffnungen 2, 3 parallel ist zur kürzeren Seite des Trägers 1. Der Abstand der Öffnungen 2, 3 beträgt ca. 350 mm. Mittig zwischen den Öffnungen 2, 3 ist eine Buchse 4 angeordnet, welche eine zylindrische Aufnahme für ein Werkzeug bildet, wobei die Längsachse des Zylinders senkrecht zur Hauptfläche des Trägers 1 steht. Die Buchse 4 wird weiter unten, im Zusammenhang mit der Figur 4, eingehender beschrieben.

Die Hauptfläche des Trägers 1 weist einen inneren Bereich 5 auf sowie einen Randbereich 6, welcher sich entlang des Randes ca. 4 mm nach innen erstreckt. Der innere Bereich 5 und der Randbereich 6 bilden zusammen eine im Wesentlichen ebene Aufnahmefläche für zu lagernde oder transportierende Teile. Der dargestellte Träger 1 ist beispielsweise für die Aufnahme von Motorenteilen oder Getrieben geeignet.

Die Figur 2 stellt einen vertikalen Querschnitt durch die Randregion des Trägers 1 dar. Der Träger 1 ist durch eine rechteckige Platte 7 aus schichtverleimtem Pappelholz gebildet, welche praktisch vollständig von einer Kunststoffschicht 8 umschlossen ist. Die Platte 7 weist im inneren Bereich 5 eine erste Plattendicke von ca. 9.5 mm auf. Zwischen dem inneren Bereich 5 und dem Randbereich 6 ist eine Stufe 9 ausgebildet, in welcher zum Rand hin die Plattendicke beidseitig symmetrisch auf noch 3.1 mm abnimmt. Wie bereits erwähnt, bilden der innere Bereich 5 und der Randbereich 6 eine im Wesentlichen ebene Aufnahmefläche, was dadurch erreicht wird, dass die Kunststoffschicht 8 im Randbereich 6 eine erhöhte Schichtdicke von beidseitig je 4.0 mm gegenüber 0.8 mm im inneren Bereich 5 aufweist. Dies verhindert wirkungsvoll Beschädigungen der Kunststoffschicht 8 am Rand des Trägers 1, wie sie oft an Kanten von dünnen Beschichtungen auftreten. Ein zusätzlicher Kantenschutz erübrigt sich. Zusätzlich werden durch die Kunststoffschicht 8 auch die Kanten der Platte 7 vor Beschädigungen geschützt.

Am äusseren Rand der Kunststoffschicht 8 ist die Schichtdicke leicht erhöht, so dass eine ungefähr keilförmige, umlaufende Erhebung 10 gebildet wird. Diese verhindert, dass sich aufeinander gestapelte leere Träger 1 grossflächig berühren und somit, dass benachbarte Träger 1 aneinander haften, was zu grossen Problemen beim Entnehmen eines Trägers 1 vom Stapel führen würde.

Die Platte 7 reicht lediglich mit ihrem dünneren Plattenteil im Randbereich 6 bis an die Aussenkontur des Trägers 1, ansonsten ist die Oberfläche des Trägers 1 von der Kunststoffschicht 8 gebildet. Diese besteht aus einem verfestigten Giessharz auf der Basis von Polyurethan, nämlich einer Mischung von 100 Teilen Ureol® 5075 A (Leim), einem lsocyanat, mit 32 Teilen Ureol® 6414 B (Härter/Vernetzer). Diese Stoffe werden von der Firma Huntsman/Vantico hergestellt und vertrieben und sind kommerziell verfügbar. Die genannte Mischung weist eine Viskosität von 4000-6000 mPas auf, ist nach bereits 4-6 Stunden entformbar und erlaubt Schichtdicken von bis zu 75 mm. Die Shore-A-Härte der Oberfläche nach ISO 868 beträgt ca. 70. Die Schicht weist somit eine hohe Abrasionsbeständigkeit auf, und ist ausserdem abwaschbar und unempfindlich auf Feuchtigkeit, Öle oder Schmierstoffe. Sie nimmt die zu transportierenden oder zu lagernden Teile rutschfest auf.

Andere geeignete Materialien für die Kunststoffschicht sind die PU-Systeme RC-PUR® KE 9345 bzw. KE-5267 von RheinChemie.

Weil die Schicht beidseitig vorhanden ist, ist der Träger 1 besonders gut als Zwischenlage in einem Teilestapel geeignet, weil auf diese Weise all jene Teile, welche sich nicht in der obersten Lage befinden, sowohl von unten als auch von oben gehalten sind.

Ein Träger 1 aus den oben genannten Materialien mit den angegebenen Dimensionen weist eine Masse von insgesamt ca. 6,5 kg auf.

Die Figur 3 zeigt einen vertikalen Querschnitt durch eine Handgrifföffnung des Trägers. Die Öffnung 2 ist als durchgehender Ausschnitt in der Platte 7 gebildet, wobei der Innenrand der Platte 7 genau gleich bearbeitet ist, wie deren Aussenrand am Rand des Trägers 1, d. h. es ist eine innen umlaufende Stufe 11 ausgebildet, bei welcher zum Innenrand der Öffnung 2 hin die Plattendicke beidseitig symmetrisch auf noch 3.1 mm abnimmt. Die Oberfläche der Kunststoffschicht 8 verläuft wiederum im Wesentlichen eben bis zum Rand der Öffnung 2, wobei sich die Schichtdicke bei der Stufe 11 nach innen von 0.8 auf ca. 4.0 mm vergrössert. Somit ist die Kunststoffschicht auch bei der Öffnung 2 vor Beschädigungen geschützt. Der dünnere Teil der Platte 7 reicht wiederum bis ganz an den Rand der Öffnung 2. Die Kunststoffschicht 8 weist entlang des Innenrands der Öffnung 2 wiederum eine leicht erhöhte Schichtdicke auf, so dass eine ungefähr keilförmige, um die Öffnung 2 umlaufende Erhebung 12 gebildet wird. Diese verhindert - wie die Erhebung am äusseren Rand der Platte 7 ―, dass sich aufeinander gestapelte leere Träger 1 grossflächig berühren und somit, dass benachbarte Träger 1 aneinander haften.

Die Figur 4 zeigt einen vertikalen Querschnitt durch die Buchse 4 zum Ergreifen des Trägers 1 mit einem Werkzeug. Die Buchse 4 besteht aus zwei Buchsenhälften 4a, 4b aus promatverzinktem Stahl. Die innere Buchsenhälfte 4a weist einen zylindrischen Abschnitt auf und einen Flanschbereich. Die Innenfläche des zylindrischen Abschnitts der inneren Buchsenhälfte 4a bildet die metallische Kontaktfläche mit dem Werkzeug zum Ergreifen des Trägers 1. Die Aussenfläche des zylindrischen Abschnitts weist ein Aussengewinde auf. Die Aussenform des Flansches ist sechseckig (oder viereckig oder andersartig gekantet). Die äussere Buchsenhälfte 4b weist ebenfalls einen zylindrischen Abschnitt sowie einen Flanschbereich auf. In der Innenfläche des zylindrischen Abschnitts ist ein Innengewinde ausgebildet, die Aussenform des Flansches ist rund.

Durch die Platte wird zunächst ein durchgehender kreisförmiger Ausschnitt 13 gebohrt. Auf der einen Hauptfläche der Platte 7 wird koaxial zum Ausschnitt 13 eine sechseckige (oder viereckige) Ausnehmung eingefräst, auf der gegenüberliegenden Hauptfläche eine kreisförmige Ausnehmung, beide mit einer Tiefe von jeweils ca. 2.5 mm. Zunächst wird nun die innere Buchsenhälfte 4a in den Auschnitt 13 eingesetzt, wobei deren gekanteter Flanschbereich passend mit der gekanteten Ausnehmung fluchtet. Anschliessend wird die äussere Buchsenhälfte 4b von der gegenüberliegenden Seite in den Ausschnitt 13 eingeschraubt, wobei ihr Innengewinde mit dem Aussengewinde der inneren Buchsenhälfte 4a zusammenwirkt. Sobald die beiden Buchsenhälften 4a, 4b fest miteinander verschraubt sind, ist die Buchse 4 verdrehsicher und fest an der Platte 7 festgeklemmt. Ein unbeabsichtigtes Lösen der Buchsenhälften 4a, 4b kann noch durch die Anwendung eines Klebstoffs (beispielsweise aus dem Loctite®-Programm) verhindert werden. Die Dicke der Flanschbereiche ist geringer als 2.5 mm, so dass diese in den Hauptflächen der Platte 7 versenkt angeordnet sind. Es wird somit sichergestellt, dass die auf der Platte 7 positionierten Werkstücke nicht mit metallischen Flächen des Trägers 1 in Kontakt gelangen.

Die Kunststoffschicht 8 reicht bis zum Innenrand der Buchse 4 und verläuft wiederum im Wesentlichen eben, wobei die Schichtdicke im Bereich der Buchse 4 leicht grösser ist, um die geringere Höhe der Buchse 4 gegenüber der Dicke der Platte 7 auszugleichen. Die Kunststoffschicht 8 weist entlang des Innenrands der Buchse 4 wiederum eine leicht erhöhte Schichtdicke auf, so dass auch hier eine ungefähr keilförmige, um die Buchse 4 umlaufende Erhebung 14 gebildet wird. Diese verhindert - wie die Erhebungen am äusseren Rand der Platte 7 sowie umlaufend um die Handgrifföffnung -, dass sich aufeinander gestapelte leere Träger 1 grossflächig berühren und somit, dass benachbarte Träger 1 aneinander haften.

Ein Werkzeug, z. B. ein Transportroboter, kann mit einer Spannzange in die Buchse 4 eingreifen, den (leeren oder beladenen) Träger 1 erfassen und abheben. Beim Einfahren des Spanndorns der Spannzange bleibt ein Freiraum von 2-3 mm gewahrt, so dass eine Beschädigung der Kunststoffschicht 8 im Buchsenbereich vermieden wird. Sobald der Träger 1 an seinen Einsatzort transportiert worden ist, wird die Spannzange wieder gelöst und aus der Buchse 4 zurück bewegt.

Das Verfahren zur Herstellung eines erfindungsgemässen Trägers wird anhand der Figuren 5A, B beschrieben. Zunächst wird die Platte 7 aus schichtverleimtem Pappelholz vorbereitet, indem deren Dicke im Randbereich 6 verringert wird, z. B. durch beidseitig symmetrisches Abfräsen entlang der Kanten. Auch die Öffnungen für die Handgriffe werden ausgeschnitten, und die Buchse wird (wie oben beschrieben) bereits in die Platte 7 eingesetzt. Danach wird eine Schalung 15 umlaufend anschliessend an den äusseren Rand der Platte 7 angebracht, eine gleichartige Schalung erfolgt auch bei den Handgrifföffnungen und der Buchse. Für die Schalung 15 können beispielsweise Kunststoff- oder Holzmaterialien verwendet werden, wobei bei der Schalung 15 ein Material ausgewählt wird, welches vom Giessharz benetzt wird. Die Platte 7 wird mit ihrer oberen Hauptfläche exakt horizontal positioniert. Nun wird der gemäss den obenstehenden Angaben vorbereitete Giessharz auf die Platte 7 aufgegossen.

Wie in der Figur 5B sichtbar, bildet sich dann die Kunststoffschicht 8 mit einer im Wesentlichen ebenen Oberfläche, welche später die Aufnahmefläche für zu lagernde oder transportierende Teile bildet. Die abgefräste Ausnehmung am Rand des Trägers 7 wird vollständig vom Giessharz ausgefüllt, so dass im Randbereich 6 eine dickere Kunststoffschicht 8 gebildet wird. Aufgrund der Adhäsion des Giessharzes an der Schalung 15 bildet sich am äussersten Rand der Kunststoffschicht 8 die etwa keilförmige, umlaufende Erhebung 10. Als Nächstes wird nun die Kunststoffschicht 8 (passiv oder aktiv) getrocknet, bis sie eine gewisse Festigkeit erreicht hat und der Träger 1 umgedreht werden kann. Nachfolgend wird die Kunststoffschicht auf dieselbe Weise auch auf der gegenüberliegenden Hauptfläche der Platte 7 aufgebracht, so dass nach Entfernen der Schalung 15 der in den Figuren 1-4 dargestellte Träger 1 fertiggestellt ist.

Die Erfindung ist nicht auf die dargestellte Ausführungsform beschränkt. Der Träger kann in verschiedener Hinsicht der Anwendung angepasst werden, für die er bestimmt ist. Zunächst lassen sich die Formen und Dimensionen des Trägers und seiner Elemente, also der Platte, der Kunststoffschicht, der Handgriffe und der Buchse, in weiten Grenzen variieren. Dann können die Handgriffe und/oder die Buchse weggelassen werden, wenn sie nicht benötigt werden. Es können neben den beschriebenen auch andere Materialien verwendet werden, beispielsweise andere Holzarten oder Kunststoff für die Platte und andere Kunststoffe für die Beschichtung. Zur Verhinderung des Anhaftens aufeinander gestapelter Träger oder zu anderen Zwecken, z. B. um neben dem Kraftschluss auch einen gewissen Formschluss zu den aufgenommenen Teilen zu erzielen, können auch im Innenbereich des Trägers zusätzliche Erhebungen aus dem Material der Kunststoffschicht ausgebildet sein.

Bei den Handgriffen kann für die Schalung ein Material eingesetzt werden, welches vom Giessharz nicht benetzt wird, so dass umlaufend um die Handgrifföffnungen ohne Nachbearbeitung eine ergonomisch abgerundete Kante gebildet wird. Die bei der Verwendung eines benetzten Schalungsmaterials gebildete Kante kann auch weggeschnitten oder abgeschliffen werden. In den meisten Fällen ist aber die Erhebung um die Handgrifföffnung gewünscht, um das Anhaften benachbarter Platten zu verhindern. Da das Kunststoffmaterial verhältnismässig weich ist, stellt die Kante der Erhebung für die meisten Anwendungen kein ergonomisches Problem dar.

Zusammenfassend ist festzustellen, dass durch die Erfindung ein Träger zur rutschfesten Aufnahme von Teilen geschaffen wird, welcher einfach herstellbar, dauerhaft sowie einfach handhabbar und lagerbar ist.

## Patentansprüche

1. Träger zur rutschfesten Aufnahme von Teilen, wobei der Träger (1) eine Platte (7) umfasst und eine Kunststoffschicht (8), welche eine Oberseite der Platte (7) und eine Unterseite der Platte (7) im Wesentlichen vollständig bedeckt, so dass die Kunststoffschicht (8) rutschfeste ebene Aufnahmeflächen zur Aufnahme der Teile bildet, **dadurch gekennzeichnet, dass** die Platte (7) in einem Randbereich (6) eine gegenüber einem inneren Bereich (5) verringerte Plattendicke aufweist und dass sich die ebenen Aufnahmeflächen bis in den Randbereich (6) erstrecken, wobei im Randbereich (6) die Kunststoffschicht (8) eine gegenüber dem inneren Bereich (5) vergrösserte Schichtdicke aufweist.

2. Träger nach Anspruch 1, **dadurch gekennzeichnet, dass** der Randbereich (6) mit der verringerten Plattendicke im Wesentlichen vollständig entlang einem Rand der Platte (7) umläuft.

3. Träger nach Anspruch 1 oder 2, **dadurch gekennzeichnet, dass** die verringerte Plattendicke im Randbereich (6) durch beidseitige, insbesondere symmetrische, Stufen (9) an einem Übergang zwischen dem inneren Bereich (5) und dem Randbereich (6) bewirkt ist.

4. Träger nach einem der Ansprüche 1 bis 3, **dadurch gekennzeichnet, dass** die vergrösserte Schichtdicke der Kunststoffschicht (8) im Randbereich (6) mindestens das Dreifache einer Dicke der Kunststoffschicht (8) im inneren Bereich (5) beträgt.

5. Träger nach einem der Ansprüche 1 bis 4, **gekennzeichnet durch** im inneren Bereich (5) angeordnete Greifmittel (2, 3, 4) zum Erfassen des Trägers (1), insbesondere **durch** zwei Handgriffe (2, 3), welche als durchgehende Öffnungen im Träger (1) ausgebildet sind, und/oder **durch** eine Buchse (4) zum Erfassen des Trägers (1) mit einem Werkzeug, insbesondere einem Transportroboter.

6. Träger nach einem der Ansprüche 1 bis 5, **dadurch gekennzeichnet, dass** die Platte (7) eine Holzplatte ist, insbesondere aus schichtverleimtem Holz.

7. Träger nach einem der Ansprüche 1 bis 6, **dadurch gekennzeichnet, dass** die Kunststoffschicht (8) aus einem Polyurethan-Elastomer gebildet ist, insbesondere mit einer Shore-A-Härte von mindestens 40, bevorzugt mindestens 60.

8. Träger nach einem der Ansprüche 1 bis 7, **gekennzeichnet durch** mindestens einen Bereich (10, 12, 14), in welchem die Kunststoffschicht (8) eine erhöhte Schichtdicke aufweist, derart, dass eine Oberfläche des Bereichs (10, 12, 14) gegenüber den Aufnahmeflächen hervorsteht.

9. Träger nach Anspruch 8, **dadurch gekennzeichnet, dass** die Kunststoffschicht (8) in einem äussersten Randbereich eine zusätzlich erhöhte Schichtdicke aufweist, so dass, bevorzugt beidseitig, ein gegenüber den Aufnahmeflächen hervorstehender Rand (10) gebildet wird.

10. Verfahren zur Herstellung eines Trägers zur rutschfesten Aufnahme von Teilen, insbesondere eines Trägers nach einem der Ansprüche 1 bis 9, **gekennzeichnet durch** folgende Schritte:
a) Bereitstellen einer Platte (7) mit einem in einem Randbereich (6) gegenüber einem inneren Bereich (5) verringerten Querschnitt;
b) Aufgiessen einer flüssigen Kunststofflösung auf eine erste Seite der horizontal gelagerten Platte (7), derart dass auf der ersten Seite eine erste ebene Aufnahmefläche zur Aufnahme der Teile gebildet wird, welche sich bis in den Randbereich (6) erstreckt;
c) nach Erreichen einer genügenden Festigkeit Wenden der Platte (7) und Aufgiessen der flüssigen Kunststofflösung auf eine zweite Seite der wiederum horizontal gelagerten Platte (7), derart dass auf der zweiten Seite eine zweite ebene Aufnahmefläche zur Aufnahme der Teile gebildet wird, welche sich bis in den Randbereich (6) erstreckt.

11. Verfahren nach Anspruch 10, **dadurch gekennzeichnet, dass** vor dem Aufgiessen der Kunststofflösung eine sich bezüglich einer Hauptfläche der Platte (7) nach oben erstreckende Schalung (15) angebracht wird, so dass durch Adhäsion der Kunststofflösung an der Schalung (15) ein bezüglich den Aufnahmeflächen hervorstehender Rand (10, 12, 14) gebildet wird.
